Europäisches Patentamt

European Patent Office

Office européen des brevets

(11) Veröffentlichungsnummer: **0 303 058 B1**

(12) **EUROPÄISCHE PATENTSCHRIFT**

(45) Veröffentlichungstag der Patentschrift: **15.01.92**

(21) Anmeldenummer: **88111087.8**

(22) Anmeldetag: **12.07.88**

(51) Int. Cl.5: **A45D  40/16**

(54) **Verfahren und Vorrichtung zur Herstellung von Minen für Kosmetikstifte u. dgl.**

(30) Priorität: **13.08.87 DE 3726996**

(43) Veröffentlichungstag der Anmeldung:
**15.02.89 Patentblatt  89/07**

(45) Bekanntmachung des Hinweises auf die
Patenterteilung:
**15.01.92 Patentblatt  92/03**

(84) Benannte Vertragsstaaten:
**BE CH DE ES FR GB IT LI NL**

(56) Entgegenhaltungen:
**DE-C- 420 522**
**GB-A- 1 143 076**

(73) Patentinhaber: **Hempel, Matthias, Dr.**
**Grossgeschaidt 243**
**W-8501 Heroldsberg(DE)**

(72) Erfinder: **Hempel, Matthias, Dr.**
**Grossgeschaidt 243**
**W-8501 Heroldsberg(DE)**

(74) Vertreter: **Schneck, Herbert, Dipl.-Phys., Dr. et
al**
**Rau & Schneck Patentanwälte Königstrasse
2**
**W-8500 Nürnberg 1(DE)**

**Beschreibung**

Die Erfindung richtet sich auf ein Verfahren und eine Vorrichtung zum Herstellen von Minen für Kosmetikstifte nach dem Oberbegriff von Anspruch 1 bzw. 3.

Minen von Kosmetikstiften u. dgl. müssen zur Erzielung der gewünschten Gebrauchseigenschaften im fertigen Zustand eine ganz definierte Konsistenz aufweisen, wobei zur Erzielung der gewünschten Abstreicheigenschaften die Mine eine gewisse Weichheit aufweisen muß, welche sie wiederum gegen mechanische Beanspruchungen der Oberfläche und Deformationseinwirkungen empfindlich macht.

Zur Herstellung derartiger Minen ist es bekannt, vertikale, becherartige Formen vorzusehen, in diese die Formmasse einzugießen und durch ein Kühlen der Form das Aushärten zu beschleunigen und die Entformung zu erleichtern.

Auf diesem Weg hergestellte Minen werden großteils in Halteteile eingesetzt, welche als Teil einer Drehmechanik fungieren, durch welche die Mine aus einer Schutzhülse zum Schutz vor den genannten mechanischen Beeinträchtigungen herausgefahren und in einer vom Verbraucher besonders bevorzugten Ausführungsform auch wieder hineingedreht werden kann.

Herkömmlicherweise wird die Verbindung zwischen dem Halteteil und der Mine derart hergestellt, daß die fertig geformte Mine in das becher- oder napfartig ausgebildete Ende des Halteteils form- bzw. reibschlüssig eingesetzt wird. Hierdurch umgreift das becher- bzw. napfartige Ende des Halteteils das darin eingesetzte Minenende, so daß entsprechend der Wandstärke des Endes des Halteteils zwischen der Außenwand der Mine und der Schutzhülse, in die die Mine samt dem Halteteil eingesetzt wird, ein Spiel verbleibt. Dieser freie Zwischenraum kann dazu führen, daß die Mine sich bei erhöhter Temperatur, z.B. bei der Aufbewahrung in einer in der Sonne abgestellten Handtasche oder im Handschuhfach eines Kraftfahrzeugs, verbiegt, nach Beendigung der Phase erhöhter Temperatur wieder härter wird und dann bei einem Betätigen der Drehmechanik abbricht oder doch zumindest wesentlich beschädigt wird.

Bei Minen größerer Stärke ist es zur Vermeidung eines derartigen Spiels bekannt, in das Minen-Innere dornenartige Ansätze des Halteteils zur Herstellung einer Verbindung desselben mit der Mine einzustoßen.

Sowohl die Befestigung einer Mine an derartigen Dornen als auch in einer napfartigen Ausnehmung stellt einen gesonderten Arbeitsgang unabhängig von der eigentlichen Minen-Herstellung dar, wobei die entsprechenden Manipulationen auch die Gefahr einer Beschädigung der Mine und damit der Produktion von Ausschuß bergen.

Ein weiteres Problem bei herkömmlicherweise in vertikalen Formausnehmungen hergestellten länglichen Minen besteht darin, daß, insbesondere wenn zur wirtschaftlichen Herstellung zahlreiche solcher Formausnehmungen in einem Formblock zusammengefaßt sind, die Erzielung einer wünschenswerten Temperaturführung äußerst aufwendig ist. So werden z.B. im Volumen des Formblocks Kühlkanäle angebracht. Gleichwohl gelingt es trotz dieses Aufwandes nicht in optimaler Weise, die für die Anwendung besonders geeignete Kristallstruktur in wünschenswerter Weise zu erzielen.

Ein weiteres Problem der herkömmlichen vertikalen Formausnehmungen besteht darin, daß sich beim Abkühlen und Aushärten bedingt durch die Schwerkraft einerseits und die herrschenden Temperaturgradienten andererseits Gefüge-Unregelmäßigkeiten einstellen, welche die Gebrauchseigenschaften negativ beeinflussen, insbesondere z.B. bilden sich beim Einsatz von Perlglanzpigmenten unerwünschte inhomogene Strukturen aus.

Relativ dünne Minen werden herkömmlicherweise als Minenstrang extrudiert, geschnitten und anschließend gespitzt. Beim Schneiden und Spitzen der Minen müssen diese mechanisch gehalten werden, wodurch die relativ weiche Minenoberfläche der Gefahr von Beschädigungen ausgesetzt ist. Bei einem vorbekannten Verfahren zur Herstellung dünner Minen durch Gießen wird die Gießmasse über eine in die Gießform eingeführte Dosiernadel eingebracht, wobei die Dosiernadel mit zunehmendem Füllen der Form von unten nach oben aus der vertikalen Form herausbewegt wird. Dieses Verfahren ist außerordentlich aufwendig, da es ein individuelles, taktweises Befühlen Jeder einzelnen Formausnehmung erforderlich macht und überdies mit den grundsätzlichen Nachteilen eines Minenaufbaus in axialer Richtung verbunden ist.

Aus der GB-A-1 143 076 ist es zur Herstellung von Mascarastiften und insbesondere von Lippenstiften an sich bekannt, die Minen in horizontalen Formen zu gießen. Zur Entformung müssen die Fertigprodukte durch die offene Oberseite der Formausnehmungen entnommen werden, d.h. die freie obere Öffnung der Formausnehmungen muß mindestens dem maximalen Querschnitt der gegossenen Mine entsprechen. Dies führt dazu, daß das fertige Minenprodukt allenfalls halbrund, dreieckig od.dgl. ausgebildet sein und dementsprechend nicht eine wenigstens annähernd kreisförmige Querschnittskonfiguration aufweisen kann. Darüber hinaus setzt die vorbekannte Art der Entformung nach oben voraus, daß das gegossene Produkt eine hinreichende Eigenstabilität aufweist, um den Entformungsvorgang unbeschadet überstehen zu können. Dementsprechend können auf diese

2

Weise nur relativ kurze Minen großen Querschnitts gegossen werden, wie dies z.B. bei Lippenstiften der Fall ist.

Hiervon ausgehend liegt der Erfindung die Aufgabe zugrunde, ein Verfahren und eine Vorrichtung der eingangs genannten Art so auszugestalten, daß in wirtschaftlicher Weise Minen hergestellt werden können, die sich besonders zum Einsatz in Kosmetikstifte mit Drehmechanik eignen, und welche eine homogene, optimale Gebrauchseigenschaften gewährleistende Struktur aufweisen. Weiterhin soll eine rationelle Fertigung auch relativ dünner Minen ermöglicht werden.

Diese Aufgabe wird gelöst durch ein Verfahren gemäß dem kennzeichnenden Teil von Anspruch 1.

Durch diese Lösung wird ein Vorurteil der Fachwelt überwunden, welches davon ausgehend, daß- abgeschen von Lippenstiften- die Außenseite derartiger Minen eine perfekt zylindrische Konfiguration aufweisen müsse, notwendigerweise entsprechend geformte, vertikale Formen voraussetzte.

Demgegenüber wurde erfindungsgemäß erkannt, daß die durch die Verwendung horizontaler Formausnehmungen erreichten Vorteile hinsichtlich der Herstellungstechnik als solchen als auch bezüglich der fertigen Minen ganz wesentlich sind, wobei in vielen Fällen auch die Abweichung von einer exakt runden Konfiguration für sich genommen vorteilhaft sein kann. Derartige Minen eignen sich nämlich besonders gut zum Einsatz in Drehmechaniken, welche nur aus sehr wenigen (in der Regel drei) Teilen bestehen, wobei sich dies aber nur realisieren läßt, wenn die Mine drehgesichert ist. Durch eine von der Kreisform abweichende Formgebung kann eine solche Drehsicherung auf besonders einfache Weise erreicht werden. Darüber hinaus weisen Minen mit einem irgendwie gearteten länglichen Querschnitt auch den anwendungsorientierten Vorteil auf, daß sich bei relativ hoher Eigenstabilität verhältnismäßig dünne Linien auftragen lassen.

Insbesondere lassen sich mit dem erfindungsgemäßen Verfahren in wirtschaftlicher Weise auch relativ dünne Minen, d.h. Minen mit einem Durchmesser von z.B. 4 mm oder weniger, herstellen.

Ein weiterer prinzipieller Vorteil des erfindungsgemäßen Verfahrens besteht darin, daß im Gegensatz zu herkömmlichen Gießverfahren, bei welchen die Mine in axialer Richtung aufgebaut wurde, hinsichtlich der maximalen Minenlänge keine praktische Beschränkung besteht, weil die Gießmasse von der Mantelfläche her aushärtet. Dementsprechend können auch Minen von mehr als 12 cm Länge bei kleinem Durchmesser problemlos hergestellt werden.

Die Minen werden nach dem Erhärten in axialer Richtung ausgestoßen. Hierdurch kann die Öffnung an der Oberseite der Formausnehmungen sehr schmal in bezug auf die maximale Breite dieser Formausnehmungen ausgebildet werden.

Das horizontale Gießen der Minen ermöglicht es auch mit besonderem Vorteil, die Minen unmittelbar an ein Halteteil einer Drehmechanik anzugießen. Hierdurch entfällt zum einen ein gesonderter Befestigungsvorgang, andererseits kann hierdurch aber auch erreicht werden, daß die Außenseite des Halteteils und der Mine exakt fluchten, so daß eine weitgehend spielfreie Führung von Mine und Halteteil in der Schutzhülse möglich ist.

Die Aufgabe wird auch gelöst durch eine Vorrichtung gemäß dem kennzeichnenden Teil von Anspruch 3. Die danach vorgesehne Entformung in axialer Richtung ermöglicht es, auch lange, schlanke Minen sicher zu entformen und einen nur sehr Schmalen Gießschlitz vorzusehen.

Derartige in einer plattenartigen Form nebeneinander angeordnete, au sich bekannte Formausnehmungen lassen sich ohne Verwendung einer Dosiereinrichtung einfach befüllen, indem die pastenartige Gießmasse manuell oder maschinell von der Oberseite her in die Formausnehmungen gestrichen wird, wobei überschüssige Gießmasse einfach abgestrichen und einer weiteren Verwendung zugeführt werden kann.

Vorteilhafterweise ist in Verlängerung jeder Formausnehmung eine Lagerausnehmung für je ein einen Teil der Drehmechanik bildendes Halteteil vorgesehen. Auf diese Weise kann eine unmittelbare Anformung der Mine beim Gießvorgang an das Halteteil erreicht werden, wobei ein gesonderter Arbeitsgang und die hiermit gegebenenfalls auftretenden Beschädigungen der Mine vermieden werden und außerdem erreicht werden kann, daß die Außenwand von Halteteil und Mine exakt fluchten. Darüber hinaus wird ein sehr fester Sitz der Mine im Halteteil erzielt, vor allem dann, wenn durch das Vorsehen von Schlitzen in dem aufnahmeseitigen Ende des Halteteils eine Art verzahnte, formschlüssige Verbindung zwischen der eingegossenen und aushärtenden Minenmasse und dem Halteteil erzielt wird.

Mit besonderem Vorteil weist die Öffnung der Formausnehmungen an der Oberseite die Form eines Längsschlitzes auf, dessen Breite kleiner ist als die vorzugsweise zwei- bis fünfmal größere Breite der breitesten Stelle der Formausnehmung. Durch diese Konfiguration wird ein zuverlässiges, absolut gleichmäßiges Füllen der Formausnehmungen erreicht, wobei im Gegensatz zu herkömmlichen vertikalen Formausnehmungen gewährleistet ist, daß keine Lufteinschlüsse auftreten, zu deren Vermeidung herkömmlicherweise ein relativ großer technischer Aufwand getrieben werden muß. Andererseits wird durch die geringe Breite dieser Längsschlitze eine gegebenenfalls abgerundete Querschnittskonfiguration lediglich geringfügig unterbrochen, so daß das Aussehen praktisch nicht beeinträchtigt wird. Aus optischen Gründen kann die Formausnehmung an ihrer Unterseite gegenüberliegend dem Längsschlitz eine korrespondierende Abflachung aufweisen, um der fertigen Mine ein symmetrisches Erscheinungsbild zu geben.

Vorteilhafterweise ist vorgesehen, daß die Formausnehmungen im Querschnitt annähernd elliptisch ausgebildet sind. Diese Konfiguration ermöglicht eine optisch weich erscheinende Außenkontur, wobei die Grundform der Ellipse durch die Abflachung im Bereich des Längsschlitzes wenig beeinträchtigt wird, wenn die große Halbachse des Ellipsenquerschnitts parallel zu der Oberfläche der Form verläuft. Darüber hinaus eignet sich diese Form für Kosmetikstifte mit Drehmechanik, da aufgrund der elliptischen Form eine Drehsicherung der Mine erreicht werden kann, so daß die Drehmechanik besonders einfach ausgestaltet werden kann. Grundsätzlich sind natürlich auch Querschnittsformen anderer Art möglich, wie z.B. eine annähernd rechteckige, dreieckige oder annähernd runde Querschnittsform.

Vorteilhafterweise ist vorgesehen, daß das in jeder Formausnehmung liegende Vorderende der Ausstoßeinrichtung die Formausnehmung quer völlig ausfüllt und eine Spitzenformungs-Ausnehmung aufweist. Hierdurch wird erreicht, daß die Formausnehmung an dem dem Halteteil abgewandten Ende abgeschlossen ist und beim Ausstoßen der Mine der Ausstoßdruck flächig übertragen wird, wobei gleichzeitig mit dem Gießen eine Spitzenanformung erfolgen kann und sichergestellt ist, daß die Spitze beim Ausstoßvorgang nicht beschädigt wird.

Im Bereich der Enden der Formausnehmungen senkrecht zu diesen verlaufend können Einstreich-Rahmen angeordnet sein. Durch diese Rahmen wird verhindert, daß aufgetragene, pasteuse Minenmasse in den Bereich seitlich der Formausnehmungen gelangt, so daß die Minenmasse leicht aufgetragen und überschüssige Masse bequem wieder entfernt werden kann.

Letztlich kann noch vorgesehen sein, daß längs der Unterseite der Form Kühleinrichtungen angeordnet sind. Durch die flächige Grundform, welche sich durch die nebeneinander angeordneten vertikalen Formausnehmungen ergibt, kann besonders gut eine homogene Temperaturverteilung längs der gesamten Formausnehmung und eine entsprechende gezielte Temperaturführung realisiert werden. Die Anordnung von Kühleinrichtungen an der Unterseite ist ohne großen technischen Aufwand möglich, und es ist sichergestellt, daß die Kühleinrichtungen unabhängig von Befüll-und Entformvorgängen an der Formoberseite arbeiten können.

Weitere Merkmale, Vorteile und Einzelheiten der Erfindung ergeben sich aus der folgenden Beschreibung einer bevorzugten Ausführungsform anhand der Zeichnung. Dabei zeigen:

Fig. 1 eine perspektivische Darstellung zur Veranschaulichung des Grundprinzips der erfindungsgemäßen Vorrichtung

Fig. 2 eine perspektivische Darstellung einer an einem Halteteil angeformten Mine, und

Fig. 3 einen Schnitt längs der Linie III-III in Fig. 1.

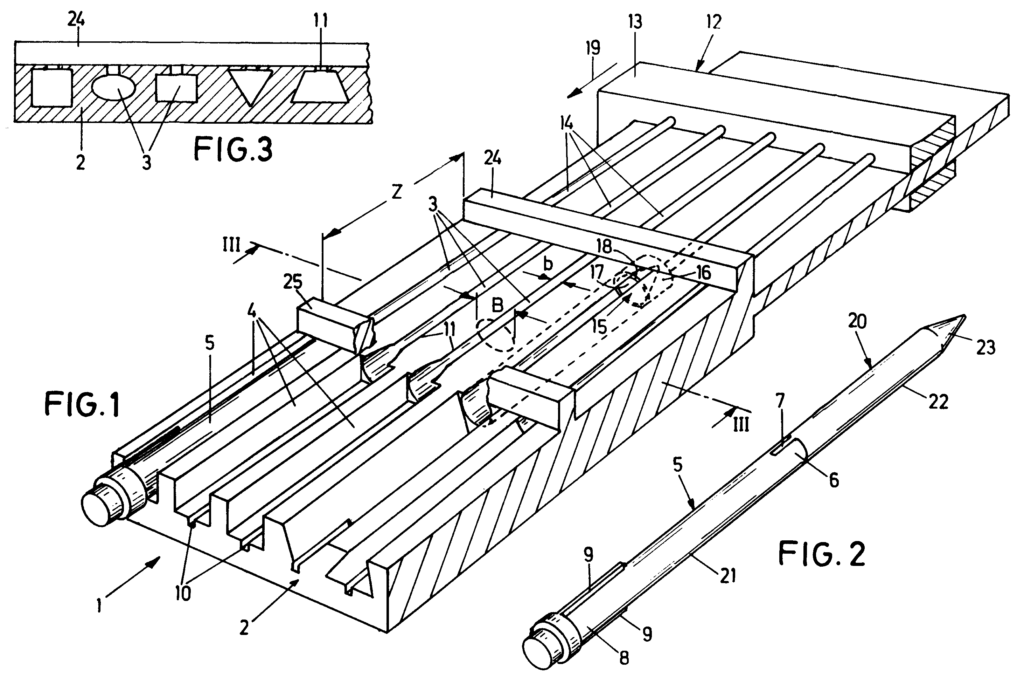

Die in der Zeichnung dargestellte Form 1 umfaßt eine Platte 2, an deren Oberseite eine Mehrzahl von Formausnehmungen 3 angeordnet ist, wobei in Fig. 1 lediglich ein Ausschnitt aus dieser Platte 2 dargestellt ist. Tatsächlich kann sich diese Platte so weit erstrecken, daß sie eine ganz erhebliche Zahl von Formausnehmungen 3 aufnehmen kann.

Wie aus Fig. 1 und insbesondere aus der Querschnittsdarstellung gemäß Fig. 3 ersichtlich ist, können die Formausnehmungen 3 ganz unterschiedliche Querschnitte aufweisen, z.B. elliptisch, rechteckig, dreieckig, schwalbenschwanzförmig usw. In der Regel wird aber eine Form 1 - anders als in der Zeichnung zur Veranschaulichung dargestellt - jeweils nur einen einheitlichen Formquerschnitt, z.B. elliptisch, aufweisen.

Jede Formausnehmung 3 geht über in eine Lagerausnehmung 4 zur Aufnahme eines Halteteils 5, welches Teil einer Drehmechanik ist, die im einzelnen nicht dargestellt ist.

Jedes Halteteil weist z.B. einen elliptischen Querschnitt auf und ist an seinem einen Ende 6 mit Schlitzen 7 und an seinem anderen Ende 8 mit Führungsrippen 9 versehen, welche in korrespondierende Führungsausnehmungen 10 der Lagerausnehmungen eingreifen, um eine definierte Orientierung der Halteteile 5 beim Einsetzen in die Form 1 sicherzustellen.

Die Formausnehmungen 3 sind nach oben offen, indem dort ein Längsschlitz 11 vorgesehen ist, dessen Breite b erheblich kleiner ist als die maximale Breite B der Formausnehmungen 3.

Das Ende 6 der Halteteile 5 ragt im eingesetzten Zustand der Halteteile in die Formausnehmungen 3 hinein, so daß beim Ausfüllen der Formausnehmungen 3 längs der Einstreichzone Z mit Minenmasse dieses Ende 6 des Halteteils 5 derart umgossen wird, daß die Masse relativ weit in das Innere des Halteteils 5 eindringt, ebenso wie in die dort vorgesehenen Schlitze 7, so daß eine sehr feste, formschlüssige Verbindung zwischen Halteteil 5 und der in der Formausnehmung 3 aushärtenden Minenmasse entsteht, wobei die Mantelfläche des Halteteils 5 und der entstehenden Mine miteinander fluchten.

Eine Ausstoßeinrichtung 12 für die fertigen Minen umfaßt im Ausführungsbeispiel einen Schieber 13, an welchem eine Mehrzahl zueinander paralleler, mit den Formausnehmungen 3 fluchtender Schubstangen 14 angeordnet ist. Am vorderen Ende der Schubstangen 14 ist eine Spitzenanformungs-Anordnung 15 vorgesehen, welche gebildet wird durch einen den Querschnitt der Formausnehmung 3 voll ausfüllenden Block 16 sowie eine Formausnehmung 17 an der der Formausnehmung 3 zugewandten Stirnseite 18 des Blocks 16.

Zum Entformen der über die Längsschlitze 11 eingebrachten Minenmasse wird die Entformeinrichtung 12 in Richtung des Pfeils 10 bewegt, nachdem durch eine in der Zeichnung nicht dargestellte Kühleinrichtung eine Abkühlung der Minenmasse nach einem gewünschten Kühlprofil erfolgt ist. Aufgrund der flächigen Ausgestaltung der Anordnung wird eine äußerst gleichmäßige Temperaturverteilung längs der Mine erreicht.

Nach Betätigung der Entformungseinrichtung 12 liegt ein in Fig. 2 dargestellter Verbund von einem Halteteil 5 und einer daran angeformten Mine 20 vor, deren Mantelflächen 21, 22 exakt fluchten, wobei die Mine 20 bereits eine fertig angeformte Spitze 23 aufweist, so daß die Gesamt-Anordnung aus Halteteil 5 und Mine 20 nach dem Gießvorgang ohne jegliche weitere Nachbearbeitung in einer Schutzhülse mit Drehmechanik montiert werden kann.

Zur Begrenzung der Einstreichzone Z sind Einstreich-Rahmen 24, 25 vorgesehen, welche längs der Enden der Formausnehmungen 3 senkrecht zu deren Längserstreckung verlaufen und verhindern, daß Minenmasse in Bereiche außerhalb der Formausnehmungen 3 gelangt.

## Patentansprüche

1. Verfahren zur Herstellung von Minen für Kosmetikstifte u.dgl., wobei die Mine in einer horizontal angeordneten, wenigstens längs eines Teils ihrer Mantelfläche offenen Formausnehmung gegossen wird, dadurch gekennzeichnet, daß zur Herstellung einer länglichen, schlanken Mine die Mine nach dem Erhärten in axialer Richtung ausgestoßen wird.

2. Verfahren nach Patentanspruch 1, dadurch gekennzeichnet, daß die Mine an ein Halteteil der Drehmechanik unmittelbar angegossen wird.

3. Vorrichtung zur Herstellung von Minen für Kosmetikstifte, umfassend eine Form mit einer Mehrzahl von horizontal angeordneten Formausnehmungen, welche wenigstens längs eines Teils ihrer Mantelfläche offen sind zum Gießen der Mine, zur Durchführung des Verfahrens nach einem der Patentansprüche 1 oder 2, dadurch gekennzeichnet, daß eine in axialer Richtung der Formausnehmungen (3) wirkende Ausstoßeinrichtung (12) für die ausgehärteten, gegossenen Minen (20) vorgesehen ist.

4. Vorrichtung nach Patentanspruch 3, gekennzeichnet durch in Verlängerung der Formausnehmungen (3) angeordnete Lagerausnehmungen (4) für je ein Halteteil (5).

5. Vorrichtung nach Patentanspruch 3, dadurch gekennzeichnet, daß die Öffnung der Formausnehmungen (3) an deren Oberseite die Form eines Längsschlitzes (11) aufweist, dessen Breite (b) kleiner ist als die vorzugsweise zwei- bis fünfmal größere Breite (B) an der breitesten Stelle der Formausnehmungen (3).

6. Vorrichtung nach einem der Patentansprüche 3 bis 5, dadurch gekennzeichnet, daß die Formausnehmungen (3) im Querschnitt annähernd elliptisch ausgebildet sind.

7. Vorrichtung nach Patentanspruch 3, dadurch gekennzeichnet, daß das Vorderende der Ausstoßeinrichtung (12) die Formausnehmungen (3) quer abschließt und in den Formausnehmungen (3) längsverschiebbar gelagert ist, und eine Spitzenformungs-Ausnehmung (17) aufweist.

8. Vorrichtung nach einem der Patentansprüche 3 bis 7, dadurch gekennzeichnet, daß im Bereich der Enden der Formausnehmungen (3) senkrecht zu diesen verlaufend Einstreich-Rahmen (24,25) angeordnet sind.

9. Vorrichtung nach einem der Patentansprüche 3 bis 8, dadurch gekennzeichnet, daß längs der Unterseite der Form (1) Kühleinrichtungen angeordnet sind.

## Claims

1. Method for producing fillings for cosmetic sticks and the like, the filling being cast in a horizontally arranged mould recess open over at least part of the area of its cylindrical surface, characterized in that for producing an elongated slim filling the filling is ejected in axial direction after curing.

2. Method according to patent claim 1, characterized in that the filling is cast integrally with a retaining element of the rotating mechanism.

3. Apparatus for producing fillings for cosmetic sticks comprising a mould with a plurality of horizontally arranged mould recesses, which are open over at least part of the area of their cylindrical surface for casting of the filling, to put into practice the method according to one of the patent claims 1 or 2, characterized in that an ejector device (12) for the cast and cured fillings (20) is provided acting in axial direction of the mould recesses (3).

4. Apparatus according to patent claim 3, characterized by bearing recesses (4) arranged in extension of the mould recesses (3) for in each case one retaining element (5).

5. Apparatus according to patent claim 3, characterized in that the opening on the top side of the mould recesses (3) has the form of a longitudinal slit (11), the width (b) of which is smaller than the width (B) two to five times larger at the widest part of the mould recesses (3).

6. Apparatus according to one of the patent claims 3 to 5, characterized in that the mould recesses (3) are of approximately elliptic form in cross-section.

7. Apparatus according to patent claim 3, characterized in that the front end of the ejector device (12) closes the mould recesses (3) crosswise and is supported in the mould recesses (3) for longitudinal displacement and has a tip forming recess (17).

8. Apparatus according to one of the patent claim 3 to 7, characterized in that retaining frames (24, 25) are arranged in the vicinity of the ends of the mould recesses (3) extending perpendicularly to the latter.

9. Apparatus according to one of the patent claims 3 to 8, characterized in that cooling units are arranged along the bottom side of the mould 1.

**Revendications**

1. Procédé pour la fabrication de mines pour des bâtons cosmétiques et similaires dans lequel la mine est moulée dans un évidement de forme, ouvert, disposé horizontalement, au moins le long d'une partie de sa surface d'enveloppe, caractérisé en ce que pour la fabrication d'une mine oblongue, mince, la mine est éjectée en direction axiale après durcissement.

2. Procédé selon la revendication 1, caractérisé en ce que la mine est moulée directement contre une partie de support du mécanisme de rotation.

3. Dispositif pour la fabrication de mines pour des bâtons cosmétiques, comprenant une forme avec un grand nombre d'évidements de forme disposés horizontalement, qui sont ouverts au moins le long d'une partie de leur surface d'enveloppe pour le moulage de la mine, pour la réalisation du procédé selon l'une des revendications 1 ou 2, caractérisé en ce qu'il est prévu un dispositif d'éjection (12) agissant en direction axiale des évidements de forme (3) pour les mines (20) moulées, durcies.

4. Dispositif selon la revendication 3, caractérisé par des évidements de palier (4) disposés en prolongement des évidements de forme (3) pour chaque partie de support (5).

5. Dispositif selon la revendication 3, caractérisé en ce que l'ouverture des évidements de forme (3) présente sur sa partie supérieure la forme d'une fente longitudinale (11), dont la largeur (b) est inférieure à la largeur (B) de préférence de deux à cinq fois plus grande à l'endroit le plus large des évidements de forme (3).

6. Dispositif selon l'une des revendications 3 à 5, caractérisé en ce que les évidements de forme (3) sont réalisés en section de façon presque elliptique.

7. Dispositif selon la revendication 3, caractérisé en ce que l'extrémité avant du dispositif d'éjection (12) ferme transversalement les évidements de forme (3), est disposé de façon à pouvoir être déplacé longitudinalement dans les évidements de forme (3) et présente un évidement (17) de forme pointue.

8. Dispositif selon l'une des revendications 3 à 7, caractérisé en ce qu'au niveau des extrémités des évidements de forme (3) sont disposés des cadres de maintien par affleurement (24, 25) s'étendant perpendiculairement à celles-ci.

9. Dispositif selon l'une des revendications 3 à 8, caractérisé en ce que des dispositifs de refroidissement sont disposés le long du côté inférieur de la forme (1).

FIG.3

FIG.1

FIG. 2

EP 0 303 058 B1